# EUROPEAN PATENT APPLICATION

(11) **EP 4 576 509 A1**
(43) Date of publication of application: **25.06.2025**
(21) Application number: 24221057.3
(22) Date of filing: 18.12.2024
(51) Int. Cl.: H02K 3/487, H02K 9/197, H02K 15/14, H02K 1/14, H02K 15/00, H02K 15/13

(54) **ELECTRIC MOTOR FOR VEHICLE TRACTION AND ROAD VEHICLE COMPRISING SUCH MOTOR**

(30) Priority: 19.12.2023 IT 202300027204
(71) Applicant: FERRARI S.p.A., 41100 Modena (IT)
(72) Inventor: PASQUALE, Stefano, 41100 MODENA (IT); QUONDAM ANTONIO, Simone, 41100 MODENA (IT); GAMBA, Matteo, 41100 MODENA (IT); FERRARA, Davide, 41100 MODENA (IT); FAVERZANI, Paolo, 41100 MODENA (IT); TRANSI, Tommaso, 41100 MODENA (IT)
(74) Representative: Studio Torta S.p.A.

(57) **Abstract**

Auto-traction electric motor (1) comprising: a stator (4) which is adapted to generate a rotating magnetic field when travelled by an electric current; and a rotor (3), which is accommodated in axially rotatable manner and with clearance within the stator (4) so as to be driven into rotation about its longitudinal axis (A) by the magnetic field generated by the stator (4); the stator (4) comprising: a series of polar expansions (14) which contribute to delimiting a central cavity (9) that accommodates the rotor (3), and are adapted to channel the magnetic field towards the rotor (2); a series of stator slots (11) which are distributed around said central cavity (9) and are adapted to accommodate the electrical conductors (10) that generate the magnetic field; and a polymeric-material sealing sleeve (15) which substantially fluid-tight isolates the stator slots (11) from said central cavity (9) and is made via over-moulding directly on the polar expansions (14), so as to form a single body with the same polar expansions (14).

## Description

### CROSS-REFERENCE TO RELATED PATENT APPLICATIONS

This application claims priority from Italian Patent Application No. 102023000027204 filed on December 19, 2023, the entire disclosure of which is herein incorporated by reference.

### TECHNICAL FIELD

The present invention relates to an electric motor for auto-traction and to a road vehicle provided with such motor.

More in detail, the present invention preferably relates to an electric motor for high-performance electric- or hybrid- propulsion cars, to which the following disclosure will make explicit reference without thereby losing generality.

### STATE OF THE ART

As is known, electric- or hybrid- propulsion cars currently on the market are equipped with an electric or hybrid powertrain, which is adapted to drive into rotation the ground resting wheels; with a rechargeable battery pack, which is capable of storing, inside itself, a certain amount of electric energy to be supplied to the electric or hybrid powertrain; and with at least one electronically-controlled inverter, which is interposed between the battery pack and the powertrain and is adapted to transform, depending on the commands given by the driver of the vehicle, the direct-current electric energy coming from the battery pack into alternating-current electric energy suitable for the electric motor(s) of the powertrain.

Currently, the auto-traction electric motors that provide the best performance and are most commonly used in the cars with electric- or hybrid- propulsion are the three-phase electric motors with permanent magnets.

Unfortunately, permanent magnets lose their magnetic properties when subjected to high temperatures, so it is necessary to prevent permanent-magnets electric motors from heating up to critical temperatures for the permanent magnets located on the rotor of the electric motor.

In most auto-traction electric motors, the airflow skimming the outer casing of the electric motor during movement of the vehicle is usually able to dissipate all the heat produced by the electric currents circulating in the stator electrical windings, thus the inner temperature of the electric motor always remains well below the maximum temperature that the permanent magnets can withstand without structural damage.

In addition or as an alternative, the cooling of the electric motor can take place by means of a cooling liquid that is circulated inside an external jacket, or by means of oil sprayed directly onto the axial heads of the stator.

Unfortunately, the electric motors that are mounted in high-performance electric- or hybrid- propulsion cars are subjected to much more intensive stress, so it is necessary to provide the motor with a more efficient cooling system that is able to extract, from the electric motor, the increased heat produced by the electric currents circulating in the stator electrical windings.

In the best permanent-magnets and radial-flux electric motors, the active cooling of the stator electrical windings is performed by circulating a flow of oil inside the slots, which are made on the inner surface of the stator magnetic core and accommodate the electrical windings.

The presence of the cooling oil inside the cavity that houses the rotor, however, causes mechanical losses that rise as the rotation speed of the rotor increases.

In auto-traction electric motors, the rotor rotates at fairly high speeds, thus the presence of oil in the air-gap area causes a significant reduction in the motor overall efficiency.

To overcome this drawback, in the oil-cooled electric motors, the stator longitudinal slots are fluid-tightly insulated from the central cavity that houses the rotor, by means of a cylindrical tubular sleeve completely separate and distinct from the stator magnetic core, which is made of polymeric material and is fitted inside the stator magnetic core, so as to seamlessly cover the entire inner surface of the magnetic core.

More specifically, the outer diameter of the polymeric-material tubular sleeve underapproximates the inner diameter of the tubular magnetic core, so that the tubular sleeve rests on the polar expansions of the stator magnetic core.

Clearly, the rotor is accommodated in axially rotatable manner within the tubular sleeve and has an outer diameter slightly smaller than the inner diameter of the tubular sleeve so as to avoid any contact with the latter.

The polymeric-material tubular sleeve therefore takes up part of the air gap separating the stator from the rotor.

Unfortunately, although allowing to significantly increase the value of the electric currents circulating in the stator electrical windings with the resulting increase in performance, the presence of the tubular sleeve reduces the overall efficiency of the electric motor. In fact, the efficiency of electric motor increases as the air gap between the rotor and stator decreases.

### SUMMARY OF THE INVENTION

Aim of the present invention is to realise an auto-traction electric motor with oil-bath cooling that can overcome the afore-mentioned drawbacks.

In accordance with the above aims, according to the present invention there is realized an electric motor for auto-traction as defined in Claim 1 and preferably, though not necessarily, in any of the claims dependent thereon.

According to the present invention moreover there is realized an electric- or hybrid- propulsion road vehicle as defined in Claim 11.

### BRIEF DESCRIPTION OF THE DRAWINGS

The present invention will now be described with reference to the accompanying drawings, which show a nonlimiting embodiment thereof, wherein:
- Figure 1 is a perspective and schematic view of an electric- or hybrid- propulsion car provided with an electric motor for auto-traction realized according to the teachings of the present invention, with parts in transparency and parts removed for clarity's sake;
- Figure 2 is a partially-exploded perspective view of the auto-traction electric motor equipping the car shown in Figure 1, with parts in section and parts removed for clarity's sake;
- Figure 3 is a partially-exploded perspective view of the stator of the electric motor shown in Figure 2, with parts removed for clarity's sake;
- Figure 4 is a front view of the stator of the electric motor shown in Figures 2 and 3, with parts removed for clarity's sake; whereas
- Figure 5 is a side view of the electric motor shown in figure 2, sectioned along the midplane and with parts removed for clarity's sake.

### DETAILED DESCRIPTION OF THE EMBODIMENTS

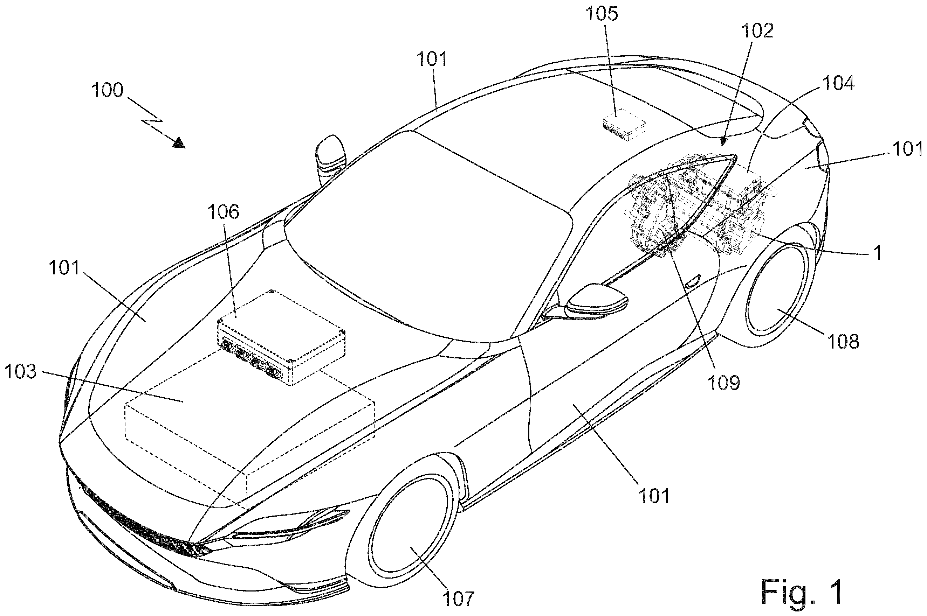

With reference to Figure 1, number 1 denotes as a whole an auto-traction electric motor that is particularly adapted for use in an electric- or hybrid- propulsion road vehicle 100, which can advantageously be used for transporting things and/or people.

More in detail, the road vehicle 100 preferably comprises: a supporting body 101 advantageously made of metal and/or composite material, which lays on the ground by means of a plurality of ground resting wheels advantageously tyred, and is provided with a passenger compartment structured and dimensioned so as to accommodate the driver of the vehicle (i.e. the person driving the road vehicle) and preferably also at least one passenger advantageously located beside the same driver; and a powertrain 102, which is located on the vehicle body 101, includes the electric motor 1, and is adapted to drive into rotation at least one of the ground resting wheels.

In addition, the road vehicle 100 further comprises: a battery pack 103 advantageously of a rechargeable type, which is located on the vehicle body 101 and is capable of storing, within itself, a certain amount of electric energy to be supplied to the powertrain 102, or rather to the electric motor 1; and an electrical power-supply unit 104, which is located on the vehicle body 101, is interposed between the battery pack 103 and the powertrain 102, and is adapted to control/regulate the flow of electric energy towards the powertrain 102, or rather towards the electric motor 1 of powertrain 102, as a function of the commands given by the vehicle driver.

More in detail, the road vehicle 100 is preferably provided with a motor control unit 105, which receives and processes the commands given by the vehicle driver and controls the electrical power-supply unit 104 according to the same commands.

Preferably, the road vehicle 100 is finally also provided with a battery-charger module 106, which is located on the vehicle body 101 and is adapted to recharge the battery pack 103 when the road vehicle 100 is connected to an external electric-energy source.

Clearly, the powertrain 102 and/or the battery pack 103 and/or the electrical power-supply unit 104 and/or the motor control unit 105 and/or the battery-charger module 106 is/are advantageously accommodated within the vehicle body 101.

In addition, the electric motor 1 is preferably an alternating-current polyphase (three-phase) electric motor.

The electrical power-supply unit 104, in turn, is preferably adapted to transform the direct-current electric energy arriving from the battery pack 103 into alternating-current electric energy suitable for the powertrain 102, or rather suitable for the electric motor 1.

Preferably, the electric motor 1 may also operate as an electric generator.

In other words, the electric motor 1 is preferably an auto-traction electrical machine of reversible type, i.e. an electrical machine that can function either as an electric motor by absorbing electrical energy and generating a mechanical driving torque, or as an electrical generator by absorbing mechanical energy and generating electrical energy.

The electrical power-supply unit 104, in turn, is preferably structured so as to control the flow of electric energy from the battery pack 103 to the electric motor 1 and vice versa.

In other words, the electrical power-supply unit 104 is preferably a static electric-energy conversion unit of a bidirectional type.

With reference to Figure 1, in the example shown, in particular, the vehicle body 101 is preferably oblong in shape and preferably lays on the ground via at least one pair of front wheels 107 and at least one pair of rear wheels 108.

Preferably, the front wheels 107 and the rear wheels 108 are moreover located in pairs on opposite sides of the vehicle vertical midplane, substantially at the vertices of a rectangle or of an isosceles trapezoid. Furthermore, the passenger compartment of vehicle body 101 is preferably located between the front wheels 107 and the rear wheels 108.

In addition, the front wheels 107 are preferably idle and steerable, while the rear wheels 108 are preferably drive and optionally also steerable.

Thus, the powertrain 102, or rather the electric motor 1, is preferably adapted to drive into rotation only the rear wheels 108.

In a different embodiment, however, the front wheels 107 could be drive wheels in addition to, or in place of, the rear wheels 108.

In other words, the road vehicle 1 is preferably a car, i.e. a motor vehicle for private transportation of persons.

With reference to Figure 1, in the example shown, in particular, the powertrain 102 is preferably located in the rear part of the vehicle body 101, and comprises the electric motor 1 and advantageously also a gear reducer 109, which mechanically connects the electric motor 1 to the driving wheels of the vehicle, or rather to the rear wheels 108, so that they can be driven into rotation.

In other words, the gear reducer 109 is interposed between the electric motor 1 and the drive wheels of the vehicle, or rather the rear wheels 108.

Optionally, the powertrain 102 could also comprise an internal combustion engine, which is adapted to drive into rotation the drive wheels of the vehicle, or rather the rear wheels 108, in combination with, or in place of, the electric motor 1.

With reference to Figure 1, on the other hand, the battery pack 103 is preferably located in the front part of the vehicle body 101.

The battery pack 103, in addition, preferably has a nominal capacity greater than or equal to 50 kWh and/or a nominal voltage greater than 600 volts or, more conveniently, equal to about 800 volts.

In other words, the battery pack 103 is preferably a high-voltage battery pack.

The electrical power-supply unit 104, in turn, is preferably located adjacent to the powertrain 102. Preferably, the electrical power-supply unit 104 moreover includes at least one electronically-controlled power inverter, advantageously of a bidirectional type, which is interposed between the battery pack 103 and the powertrain 102, or rather the electric motor 1, and is adapted to transform the direct-current electric energy arriving from the battery pack 103 into alternating-current electric energy suitable for the electric motor 1, preferably while varying its frequency and/or voltage according to signals from the motor control unit 105.

The battery-charger module 106, on the other hand, is preferably located/accommodated in the front part of the vehicle body 101, close to the battery pack 103, interposes itself between the battery pack 103 and said external electric-energy source, and is adapted to control the flow of electric energy from the external electric-energy source towards the battery pack 103, so as to recharge the battery pack 103 preferably in the shortest possible time and advantageously while preserving the structural integrity of said battery pack 103.

The external electric-energy source may be, for example, a road-vehicles charging station of known type or the traditional domestic power grid.

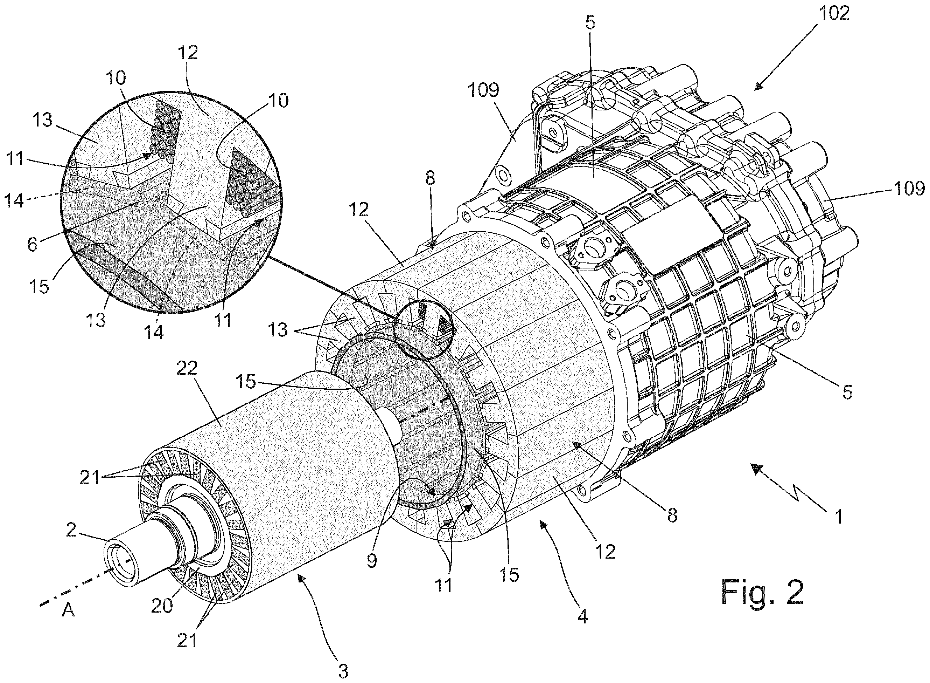

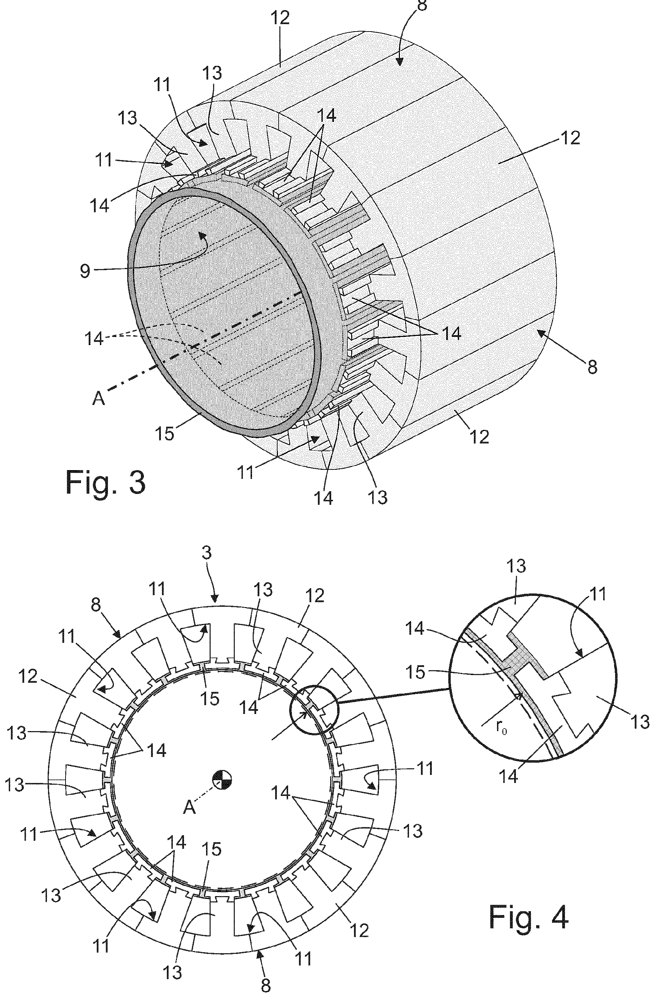

With reference to Figures 2, 3, 4 and 5, on the other hand, the electric motor 1 is preferably an alternating-current (three-phase) radial-flux electric motor.

The electric motor 1 in particular comprises: a fixed part or stator, which is adapted to generate, inside itself, a rotating magnetic field when electric current flows through it; and a moving part or rotor, which is housed in axially rotatable manner and with clearance within the stator, so as to be drive into rotation about its longitudinal axis by the magnetic field generated by the stator.

More specifically, the rotor and the stator delimit, between themselves, an annular-shaped empty space, traditionally called the air gap, which has a small thickness but nevertheless such to allow the rotor to freely rotate without touching the stator.

The stator in turn comprises: a series of polar expansions, which concur in delimiting the central cavity that accommodates the rotor, and are adapted to channel the magnetic field towards the rotor; a series of stator slots, which are distributed around said central cavity and are adapted to accommodate the electrical conductors that generate the magnetic field; and a polymeric-material sealing sleeve, which substantially fluid-tightly isolates the stator slots from said central cavity.

The tubular sleeve, in addition, is made via over-moulding directly onto the polar expansions of the rotor, so as to form a single body with the same polar expansions.

More in detail, the sealing sleeve is substantially tubular in shape and extends substantially coaxial to the rotor, around the rotor.

With reference to Figure 2, in particular, the electric motor 1 comprises: a central drive shaft 2, which is capable of rotating about its longitudinal axis A; a rotor 3 advantageously substantially cylindrical in shape, which extends coaxial to the longitudinal axis A and is fitted in rigid manner onto the drive shaft 2 so as to rotate together with the latter; and a stator 4 with a substantially annular structure, which is provided with a large, substantially rectilinear central cavity, which extends coaxial to longitudinal axis A, is advantageously substantially cylindrical in shape, and accommodates with clearance the rotor 3.

More specifically, the diameter of the central cavity of stator 4 is slightly larger than the outer diameter of the rotor 3.

Preferably, the electric motor 1 is moreover provided with an rigid outer casing 5, oblong in shape and internally hollow, which is preferably made of an advantageously nonmagnetic, metal material and is structured so as to accommodates within itself the stator 4, the rotor 3 and the drive shaft 2, and is preferably also provided with an opening, through which one end of drive shaft 2 emerges or juts out cantilevered outside the same rigid casing 5.

In the example shown, in particular, the end of drive shaft 2 is preferably mechanically connected directly to the gear reducer 109.

With reference to Figures 2, 3, 4 and 5, in particular the stator 4 preferably comprises: an outer magnetic core 8 substantially annular in shape, which has a ferromagnetic behaviour and is provided with a large central cavity 9 substantially rectilinear and preferably substantially cylindrical in shape, which extends parallel, or rather coaxial to longitudinal axis A, and is engaged in axially rotatable manner and with clearance by the rotor 3; and a series of electrical conductors 10, which are located within specific longitudinal housing slots 11, traditionally called stator slots, suitably distributed on the inner surface of magnetic core 8 delimiting the central cavity 9.

The electric conductors 10 are adapted to generate, when travelled by an electric current, a radial magnetic field.

More in detail, the electrical conductors 10 are suitably connected to each other so as to form a series of electrical windings which are adapted to generate, when travelled by an electric current, a radial magnetic field.

The electrical power-supply unit 104, in turn, is adapted to circulate alternating electric current in the electrical windings formed by the electrical conductors 10, so as to generate a rotating magnetic field.

With reference to Figures 2, 3, 4 and 5, in particular, the outer magnetic core 8 is preferably made of ferromagnetic material, and preferably includes: an outer annular yoke 12, which is preferably a substantially cylindrical tubular in shape and extends around rotor 3 while remaining spaced from the latter and advantageously also substantially coaxial to the longitudinal axis A; a series of inner ridges or protrusions 13, traditionally called stator teeth, which extend cantilevered from the inner perimeter of the annular yoke 12 towards the rotor 3, advantageously in a substantially radial direction, and are spaced out, advantageously substantially in regular manner, around the rotor 3 and/or the longitudinal axis A; and a series of polar expansions 14, which are located each at the top/end of a respective stator tooth 13, so as to surround and delimit the central cavity 9 of magnetic core 8.

In other words, the annular yoke 12 surrounds the central cavity 9 while remaining spaced apart from the same. The ridges or inner protrusions 13 extend cantilever from the annular yoke 12 towards the central cavity 9 preferably in a substantially radial direction, and are advantageously also distributed around the central cavity 9 in a substantially regular manner. Finally, the polar expansions 14 are located each on the top of a respective inner ridge or protrusion 13, so as to surround and delimit the central cavity 9.

Preferably, the polar expansions 14 moreover have a concave shape locally substantially complementary to that of stator 3.

More in detail, the ends of the polar expansions 14 preferably have a cylindrical profile with a radius of curvature substantially equal to the radius of curvature r₀ of the central cavity 9 of magnetic core 8.

Clearly, the stator slots 11 are flanked and laterally delimited by the stator teeth 13, and are moreover contiguous and in direct communication with the central cavity 9 of magnetic core 8. In other words, the stator slots 11 are intercalated with the stator teeth 13.

In the example shown, in particular, the magnetic core 8 of stator 4 preferably comprises a substantially cylindrical-shaped, rectilinear tubular body, which is made of ferromagnetic material, extends coaxial to longitudinal axis A, and is internally provided with a plurality of longitudinal grooves, which are distributed in a substantially regular manner on the inner surface of the same tubular body, and are dimensioned so as to accommodate each a given number of electrical conductors 10.

In more detail, the longitudinal grooves are preferably substantially rectilinear and substantially parallel to the longitudinal axis of the tubular body, i.e. substantially parallel to the longitudinal axis A.

The longitudinal grooves of the tubular body form the rotor slots 11, while the ridges between the longitudinal grooves form the stator teeth 13 of the magnetic core 8.

Preferably, moreover the various sections of magnetic core 8 are mainly made up of stacks of ferromagnetic-material laminations closely juxtaposed to one another.

With reference to Figures 2, 3, 4 and 5, the stator 4 additionally comprises an sealing sleeve 15, which is made of polymeric material, and is adapted to separate/isolate, in fluid-tight manner, the central cavity 9 of magnetic core 8 from the stator slots 11 that surround and are contiguous to the same central cavity 9.

More in detail, the sealing sleeve 15 is substantially rectilinear tubular in shape and extends within the magnetic core 8, around rotor 2. Preferably, the tubular sealing sleeve 15 is furthermore substantially coaxial to the longitudinal axis A.

In the example shown, in particular, the sealing sleeve 15 is preferably substantially cylindrical tubular in shape and/or preferably has a nominal thickness lower than 2 mm (millimetres) .

In addition, the sealing sleeve 15 preferably also extends cantilevered beyond the two opposite axial ends of the central cavity 9 of magnetic core 8, advantageously for the entire length of the housing that the stator 4 takes up within the rigid casing 5.

Differently from currently known electric motors, moreover, the sealing sleeve 15 is made of polymeric material via over-moulding directly on the polar expansions 14 of the magnetic core 8, so as to form a single body with the same polar expansions 14.

The polar expansions 14 of magnetic core 8 are therefore unmovably entrapped in the sealing sleeve 15.

The sealing sleeve 15 is therefore substantially entirely located outside the central cavity 9 of the magnetic core 8, and contributes to delimiting the same central cavity 9.

In other words, the sealing sleeve 15 surrounds, or rather circumscribes, and delimits the central cavity 9 of the magnetic core 8 of stator 4, advantageously substantially seamlessly, together with the polar expansions 14.

More in detail, the outer surface of sealing sleeve 15 has a radius of curvature which preferably over-approximates the radius of curvature r₀ of the central cavity 9 of magnetic core 8, while the inner surface of sealing sleeve 15 has a radius of curvature which is preferably substantially equal to, or in any case under-approximates the radius of curvature r₀ of the same central cavity 9.

With reference to Figures 2, 3, 4 and 5, in addition, the polar expansions 14 of magnetic core 8 are preferably structurally separated and disjointed from the stator teeth 13, and are rigidly fixed to the latters by means of mechanical coupling members.

In other words, the polar expansions 14 of magnetic core 8 are preferably separate and distinct pieces from the respective stator teeth 13, and are rigidly fixed to the respective stator teeth 13.

More in detail, the polar expansions 14 of magnetic core 8 are preferably rigidly fixed to the stator teeth 13 by means of a shape coupling.

In other words, the coupling members are preferably mortise and tenon.

Even more specifically, the polar expansions 14 of magnetic core 8 are preferably rigidly fixed to the tops of the respective stator teeth 13 by means of a male-female coupling with axial sliding engagement.

Preferably, the engagement direction is furthermore substantially parallel to the longitudinal axis of the central cavity 9 of magnetic core 8, i.e. to the motor longitudinal axis A.

In the example, in particular, each polar expansion 14 of magnetic core 8 is preferably rigidly fixed to the corresponding and adjacent stator tooth 13 by means of a dovetail coupling with engagement direction parallel to the motor longitudinal axis A.

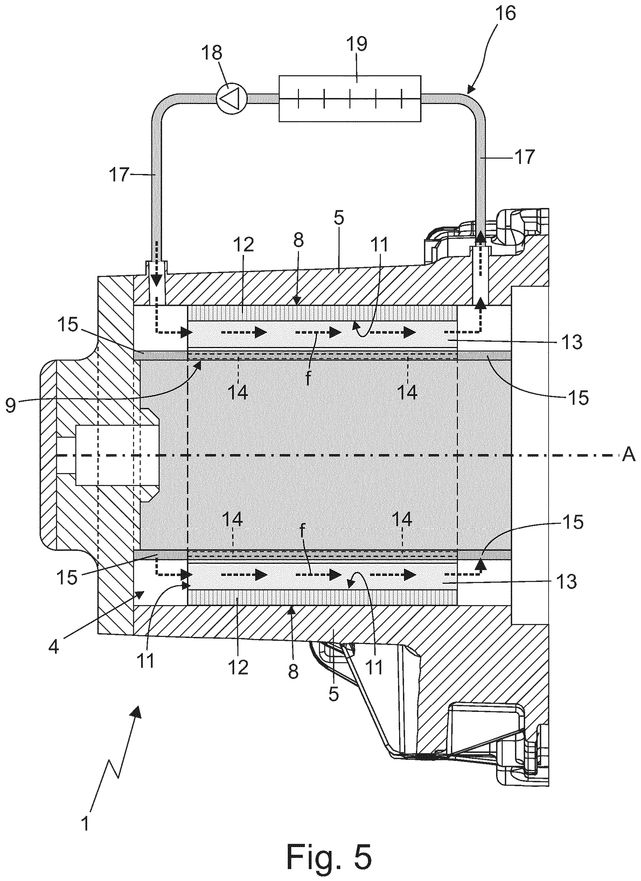

With reference to Figure 5, finally the electric motor 1 moreover includes a cooling system 16, which communicates with the stator slots 11 and is adapted to circulate a flow f of oil or other heat-transfer liquid within the stator slots 11, so that the oil or other heat-transfer liquid skims and cools down the electrical conductors 10.

More in detail, the cooling system 16 is preferably at least partially realized in the outer casing 5 so as to directly communicate with the two opposite ends of each stator slot 11, and is adapted to circulate a flow f of oil or other heat-transfer liquid along the entire length of the various stator slots 11.

Even more specifically, the cooling system 16 preferably comprises: a hydraulic circuit 17, which connects to one another the opposite two ends of the various stator slots 11 so as to form a closed loop, within which the oil or other heat-transfer liquid can circulate; an advantageously electrically-operated, circulation pump 18 which is adapted to circulate a flow f of oil or other heat-transfer liquid within the hydraulic circuit 17 and the stator slots 11; and advantageously also a heat exchanger 19, which is placed along the hydraulic circuit 17 so as to be crossed by the flow f of oil or other heat-transfer liquid that also passes through the stator slots 11.

With reference to figure 2, the rotor 3 preferably comprises permanent magnets.

In other words, electric motor 1 is preferably a (three-phase) synchronous electric motor with permanent magnets.

More in detail, the rotor 3 preferably comprises: a central core 20 advantageously substantially cylindrical in shape, which is preferably made of ferromagnetic material and is fitted in rigid manner onto the drive shaft 2 so as to rotate together with the latter; and a series of permanent magnets 21, which are suitably distributed on or in the central core 20, so as to create a magnetic field which interacts in a known manner with the magnetic field generated by the electrical conductors 10.

In more detail, the permanent magnets 21 are preferably distributed in a substantially regular manner around the motor longitudinal axis A.

In the example shown, in particular, the central core 20 preferably comprises a stack of ferromagnetic-material laminations closely juxtaposed to one another. The permanent magnets 21, on the other hand, are preferably accommodated or recessed within special seats made on the outer peripheral surface of central core 20.

Additionally or alternatively, the permanent magnets 21 could also be accommodated within seats made inside the core 20.

Preferably, the outer peripheral surface of the core 20 is finally covered, advantageously seamlessly, by a protective coating 22 preferably made of a plastic or composite material, which advantageously also surmounts and covers the permanent magnets 21.

Operation of electric motor 1 and of road vehicle 100 are easily inferable from the foregoing and require no further explanation.

On the other hand, the assembly of electric motor 1, or rather of stator 4, basically comprises the step of realizing the polar expansions 14 of magnetic core 8, and then the step of injection moulding the sealing sleeve 15 directly over the polar expansions 14 of magnetic core 8 so that the sealing sleeve 15 forms a single body with the latter polar expansions.

The polar expansions 14 of magnetic core 8 are therefore unmovably entrapped in the sealing sleeve 15.

Preferably, the assembly of electric motor 1, or rather of stator 4, afterwards comprises the step of fixing the polar expansions 14 previously trapped in the sealing sleeve 15 rigidly onto the respective stator teeth 13.

More in detail, the assembly of electric motor 1, or rather of stator 4, preferably comprises the steps of: realizing the remaining part of magnetic core 8, i.e. the assembly formed by the outer annular yoke 12 and the stator teeth 13; aligning the polar expansions 14 previously trapped in the sealing sleeve 15 with the stator teeth 13 of the magnetic core 8; and finally fixing the polar expansions 14 rigidly to the stator teeth 13, or rather to the tops of the various stator teeth 13.

The advantages connected with the particular structure of electric motor 1 are remarkable.

Being made by over-moulding directly onto the polar expansions 14 of the stator 4, the sealing sleeve 15 is almost entirely displaced outside the perimeter of the central cavity 9 of magnetic core 8, thus allowing to significantly reduce the dimensions of the air gap (i.e. the empty space between rotor 3 and stator 4), consequently getting a significant increase in the performance of electric motor 1.

Finally, it is clear that modifications and variations may be made to the electric motor 1 and to the road vehicle 100 without however departing from the scope of the present invention.

For example, instead of being a synchronous motor with a permanent-magnets rotor, the electric motor 1 may be an (three-phase) asynchronous motor.

## Claims

1. An electric motor (1) for auto-traction comprising: a stator (4) which is adapted to generate a rotating magnetic field when travelled by an electric current; and a rotor (3), which is accommodated in axially rotatable manner and with clearance within the stator (4) so as to be driven into rotation about its longitudinal axis (A) by the magnetic field generated by the stator (4);
said stator (4) comprising: a series of polar expansions (14) which contribute to delimiting a central cavity (9) that accommodates the rotor (3), and are adapted to channel the magnetic field towards the rotor (2); a series of stator slots (11) which are distributed around said central cavity (9) and are adapted to accommodate the electrical conductors (10) that generate the magnetic field; and a polymeric-material sealing sleeve (15) which substantially fluid-tight isolates the stator slots (11) from said central cavity (9);
the electric motor (1) being **characterised in that** said sealing sleeve (15) is made via over-moulding directly on the polar expansions (14) so as to form a single body with the same polar expansions (14).

2. Electric motor according to Claim 1, wherein the sealing sleeve (15) is substantially tubular in shape and extends around said rotor (3).

3. Electric motor according to Claim 1 or 2, wherein the stator (4) comprises a substantially annular-shaped magnetic core (8), which has a ferromagnetic behaviour, delimits said central cavity (9) and includes: an annular yoke (12) surrounding said central cavity (9); and a series of inner ridges or protrusions (13) that extend cantilever from the annular yoke (12) towards said central cavity (9) in a substantially radial direction; the polar expansions (14) being located each on the top of a respective inner ridge or protrusion (13), so as to surround and delimit said central cavity (9) .

4. Electric motor according to Claim 3, wherein the polar expansions (14) are distinct and separated from said inner ridges or protrusions (13), and are rigidly fixed to the same inner ridges or protrusions (13) by means of coupling members.

5. Electric motor according to Claim 4, wherein the polar expansions (14) are rigidly fixed to said inner ridges or protrusions (13) by means of a shape coupling.

6. Electric motor according to Claim 5, wherein the polar expansions (14) are rigidly fixed to the inner ridges or protrusions (13) by means of a male-female coupling with axial sliding engagement.

7. Electric motor according to Claim 6, wherein said central cavity (9) extends parallel to said longitudinal axis (A).

8. Electric motor according to Claims 6 and 7, wherein the engagement direction of said male-female coupling is substantially parallel to said longitudinal axis (A).

9. Electric motor according to Claim 6, 7 or 8, wherein said polar expansions (14) are rigidly secured to said inner ridges or protrusions (13) via a dovetail coupling.

10. Electric motor according to any one of the preceding claims, wherein the rotor (3) comprises permanent magnets (21) .

11. A road vehicle (100) provided with ground resting wheels (107, 108) and comprising: an electrical or hybrid powertrain (102), which is adapted to drive into rotation at least one of said ground resting wheels (107, 108); a battery pack (103), which is capable of storing inside itself a given amount of electric energy to be supplied to said powertrain (102); and an electrical power-supply unit (104), which is adapted to regulate the flow of electric energy from the battery pack (103) to the power train (102), according to the commands given by the vehicle driver;
the road vehicle (100) being **characterised in that** said powertrain (102) comprises an electric motor (1) realized according to any one of the preceding claims.
